Europäisches Patentamt

European Patent Office (11) Veröffentlichungsnummer: **0 227 936**

Office européen des brevets **B1**

(12) # EUROPÄISCHE PATENTSCHRIFT

(45) Veröffentlichungstag der Patentschrift: (51) Int. Cl.⁴: **C 09 J 5/04,** B 05 D 1/34
25.01.89

(21) Anmeldenummer: 86116040.6

(22) Anmeldetag: 20.11.86

(54) **Verfahren zum Auftragen einer Masse auf Gegenstände.**

(30) Priorität: 23.12.85 DE 3545899

(43) Veröffentlichungstag der Anmeldung:
08.07.87 Patentblatt 87/28

(45) Bekanntmachung des Hinweises auf die Patenterteilung:
25.01.89 Patentblatt 89/4

(84) Benannte Vertragsstaaten:
AT BE CH DE ES FR GB GR IT LI LU NL SE

(56) Entgegenhaltungen:
NL-A-269 226

(73) Patentinhaber: Gurit- Essex AG, CH- 8807 Freienbach
(CH)

(72) Erfinder: Saur, Wolfgang, Schwerzistrasse 4, CH-
8708 Männedorf (CH)

(74) Vertreter: Rottmann, Maximilian R., c/o Rottmann,
Quehl & Zimmermann AG Glattalstrasse 37, CH-
8052 Zürich (CH)

# EP 0 227 936 B1

## Beschreibung

Die vorliegende Erfindung bezieht sich auf ein Verfahren zum Auftragen einer mindestens zwei Komponenten umfassenden Klebe-, Dichtungs-, Versiegelungs- oder Beschichtungsmasse auf Gegenstände nach dem Oberbegriff des Patentanspruches 1. Ferner bezieht sich die Erfindung auf ein Verfahren zum Betrieb einer Vorrichtung zur Durchführung dieses Auftragverfahrens, gemäß dem Oberbegriff des Patentanspruches 22.

Zum Kleben, Abdichten, Versiegeln oder Beschichten sind selbsthärtende Substanzen bekannt; unter selbsthärtend wird dabei ein Ausreagieren der Masse unter dem Einfluss von Feuchtigkeit, insbesondere der Luftfeuchtigkeit, unter den Einfluss von Luftsauerstoff, unter dem Einfluss von Licht, insbesondere im UV-Bereich, unter dem Einfluss vom Wärme oder dgl. verstanden. Ein gemeinsamer Nachteil dieser Massen ist darin zu sehen, daß das Ausreagieren zu einem erwünschten Endzustand verhältnismäßig langsam, z. B. erst innerhalb von Stunden oder Tagen erfolgt.

Man hat deshalb Zwei-Komponenten-Systeme geschaffen, mit denen erreicht werden kann, daß ein Ausreagieren der Masse in wesentlich kürzerer Zeit, z. B. innert weniger Minuten, ja sogar Sekunden erfolgt. Es ist dabei zu unterscheiden zwischen einer ersten Gruppe von Zwei-Komponenten-Systemen, bei denen ein Ausreagieren dann und nur dann erfolgt, wenn die beiden Komponenten zusammengemischt sind, und einer zweiten Gruppe, bei denen eine Komponente allein ein ähnliches oder gleiches Verhalten wie eine Ein-Komponenten-Masse zeigt, also innert einer gewissen, verhältnismäßig langen Zeit, wie eingangs erwähnt, ausreagieren wird, wobei aber ein Zumischen der zweiten Komponente zu einem bedeutend rascheren Ausreagieren der Masse zum erwünschten Endzustand führt. Gemäß dem Oberbegriff des Patentanspruches 1 befasst sich die vorliegende Erfindung lediglich mit Zwei-Komponenten-Systemen der genannten zweiten Gruppe.

Beim kontiniuerlichen Auftragen einer derartigen Masse auf Gegenstände müssen die Komponenten im Durchlauf, also ebenfalls kontinuierlich, miteinander vermischt werden. Dabei werden die getrennt aufbewahrten Komponenten z. B. über je eine Dosierpumpe einem Mischorgan zugeführt, an das als Auslass ein Applizierorgan zum Auftragen der Mischung auf die Gegenstände angeschlossen ist Ein langfristiges Lagern der Komponenten ist, solange sie voneinander getrennt sind, ohne weiteres möglich, z. B. in luft- und/oder lichtdichten Behältern. Sobald aber die Komponenten zusammengemischt worden sind, setzt eine beschleunigte Reaktion ein, so daß alsbald ein Erhärten der Masse zu erwarten ist.

Bei einer stetigen Arbeitsweise, d.h. wenn eine solche Misch- und Auftragsvorrichtung ständig in Betrieb ist, ist diese Eigenschaft sehr erwünscht, da die Mischung nach dem Auftragen auf die Gegenstände innert kurzer Zeit den angestrebten, ausreagierten Zustand erreichen soll. Bei einem Unterbruch aber wird der Rest der Mischung, der sich im Mischorgan und im Applizierorgan befindet, ebenfalls reagieren und innert kurzer Zeit diese Teile verstopfen. Um dies zu vermeiden, ist es an sich bekannt, bei einem voraussehbaren Unterbruch des Auftragprozesses das Mischorgan und das Applizierorgan zu spülen, um ein Zusetzen dieser Teile zu vermeiden. Diese Spülung, die im allgemeinen mit einem Lösungsmittel erfolgt, muss solange durchgeführt werden, bis keine reaktionsfähige Mischung mehr in den genannten Teilen vorhanden ist.

Ein Nachteil dieser bekannten Verfahren besteht darin, daß zur Spülung ein Lösungsmittel verwendet werden muss, das eigentlich als verlorener Materialaufwand zu betrachten ist. Zudem stellt dieses Lösungsmittel eine Umweltbelastung dar, es sei denn, es werden aufwendige Wiederaufbereitungsanlagen dafür verwendet, die aber wiederum viel Energie benötigen. Ein weiterer Nachteil ist, daß vom eigentlichen Nutzprodukt, nämlich von der aufzutragenden Masse, bei jeder Spülung ein bestimmter Anteil verloren geht. Dies ist vom wirtschaftlichen Standpunkt aus wenig interessant und wäre daher zu vermeiden.

Unterbrüche im stetigen Prozessablauf sind aber nicht zu umgehen. Bedingt werden solche Unterbrüche durch Schichtwechsel, durch Arbeitspausen, durch unvorhersehbare Störungen im Betriebsablauf usw.

Aus der NL-A-269 226 ist ein Verfahren zum Auftragen von Zweikomponenten-Massen bekannt, bei dem der vorerwähnte Nachteil, nämlich die Spülung mittels eines Lösungsmittels, dadurch vermieden wird, daß bei einem geplanten Unterbruch der Förderung der beiden Harzkomponenten in die Mischkammer die Zuführung einer Harzkomponente geschlossen wird. Die zweite, weiterfließende Harzkomponente übernimmt nun die Reinigung der Mischkammer. Aus der Aussage in jener Veröffentlichung, daß die Reinigung in der Regel mit einer Durchsatzmenge vollzogen wird, so daß bei der kleinen Dimensionierung der Mischkammer dieses Verfahren kostenmäßig nicht aufwendig ist, muss geschlossen werden, daß die zur Reinigung durchgeleitete Harzkomponente als Abfall betrachtet wird und somit nicht auf den Gegenstand aufgetragen wird. Diese Annahme wird erhärtet durch die Aussage, daß eine beim Ausschalten der Anlage in Funktion tretende Verzögerungsschaltung vorgesehen ist, so daß sich bei einem geplanten Ausschalten nur eine Komponentenzuführung schließt und die Anlage weiterläuft, bis die Reinigung vollzogen ist. Die Lehre dieser NL-A-269 226 weicht also vom erfindungsgemäßen Verfahren völlig ab und vermag auch keinen Hinweis zu geben, wie ein Verstopfen der Misch- und Auftragsorgane bei einem unerwarteten Unterbruch des Auftragens vermieden werden soll.

Es ist die Aufgabe der vorliegenden Erfindung, ein Verfahren der eingangs genannten und im Oberbegriff des Patentanspruches 1 näher definierten Art vorzuschlagen, das die vorstehend aufgezählten Nachteile vollständig vermeidet, also insbesondere ermöglicht, die Klebe-, Dichtungs-, Versiegelungs- oder Beschichtungsmasse ohne die geringsten Verluste aufzutragen und bei Vermeidung einer Umweltbelastung bzw. eines zusätzlichen Aufwandes an Spülmitteln bzw. für die Neutralisierung oder Wiederaufbereitung von

2

Spülmitteln auch mit (vorhersehbaren oder unvorhergesehenen) Pausen zwischen den einzelnen Auftragsvorgängen zu arbeiten.

Unter dem Begriff "Auftragvorgang" wird in Sinne der vorliegenden Erfindung, in breitester Weise, derjenige Vorgang verstanden, der mit dem Austreten eines Stoffes aus einem Auftragorgan beginnt und dann endet, wenn kein Stoff mehr aus dem Auftragorgan austritt. Explizit ausgeschlossen aus dieser Definition sind kurze Unterbrüche, wie sie beim Auftragen auf eine Reihe von Gegenständen nacheinander auftreten können. Als typische Beispiele werden nachfolgend drei mögliche Beispiele von "Auftragvorgängen" angeführt:

- Auf einen einzelnen Gegenstand wird innerhalb einer Mehrzahl von einzelnen Bereichen die Masse aufgetragen; es finden also mehrere Auftragsvorgänge bei diesem Gegenstand statt, entweder simultan oder nacheinander.
- Auf einen einzelnen Gegenstand wird die Masse innerhalb eines einzigen Auftragvorganges aufgetragen; der Auftragvorgang ist also mit diesem Gegenstand abgeschlossen.
- Ein Auftragvorgang umfaßt mehrere Gegenstände:

  Innerhalb eines einzelnen Auftragvorganges wird die Masse auf mehrere, z. B. dicht nebeneinanderliegende, meistens kleinere Gegenstände nacheinander, gegebenenfalls auch simultan, aufgetragen;
- Innerhalb eines einzelnen Auftragvorganges wird die Masse nacheinander auf mehrere Gegenstände aufgetragen, die z. B. auf einem Fließband in raschem Takt der Auftragstelle zugeführt werden.

In diesem letzterem Fall obliegt es der Produktionsplanung, den Anfang und das Ende des "Auftragvorganges" festzulegen.

Gemäß der Erfindung wird die gestellte Aufgabe durch die im Patentanspruch 1 angegebenen Merkmale gelöst. Damit ist sichergestellt, daß sich zu Ende eines Auftragvorganges, d.h. zu einem Zeitpunkt, in welchem ein gewollter oder ungewollter Unterbruch stattfinden wird bzw. könnte, nur die erste Komponente im Mischorgan und den sich an dieses anschließenden Teilen befindet. Wie erinnerlich, reagiert diese erste Komponente entweder sehr langsam, setzt also diese Elemente in absehbarer Zeit nicht zu, oder überhaupt nicht, da die eine Reaktion auslösenden Einflüsse wie Luftfeuchtigkeit, UV-Strahlung und dgl. von der ersten Komponente ferngehalten sind, weil sich jene im Inneren des Mischorgans bzw. der an dieses angeschlossenen Teile befindet.

Nachteile sind durch dieses Verfahren nicht zu erwarten. Im Falle einer Klebeverbindung ist ein angestrebtes, mehr oder weniger sofortiges Haften der mit der Masse versehenen Gegenstände an einem anderen Gegenstand dadurch gegeben, daß das Auftragen der Klebemasse in einem Teilabschnitt in Form der sofort reagierenden Mischung erfolgte; dadurch ist eine Fixierung gegeben, die z. B. eine unmittelbare Weiterverarbeitung der beiden miteinander verklebten Gegenstände ermöglicht. Die schlussendlich angestrebte Fixierung der restlichen Abschnitte, auf die lediglich die an sich selbsthärtende, erste Komponente allein aufgetragen worden ist, wird nach einer gewissen Zeit auch erreicht werden, nämlich dann, wenn die erste Komponente unter dem Einfluss von Luftfeuchtigkeit, UV-Strahlung oder dgl. ausreagiert hat. Im Falle einer Dichtungsmasse, einer Versiegelungsmasse oder einer Beschichtungsmasse spielen diese Zusammenhänge eine etwas geringere Rolle, da im allgemeinen keine unmittelbare, hohe mechanische Belastung zu erwarten ist. Immerhin kann aber auch in diesen Fällen das Auftragen der Masse so gesteuert werden, daß in solchen Abschnitten, in denen eine bald darauffolgende Berührung der Masse zu erwarten ist, eine Mischung der ersten und weiterer Komponenten aufgetragen wird, während in weniger exponierten Abschnitten nur die erste Komponente allein aufgetragen wird, die ja dann schließlich, wenn auch nach einer längeren Zeitdauer, ebenfalls ausreagieren wird.

In den vom Patentanspruch 1 abhängigen Ansprüchen 2 bis 18 sind verschiedene Möglichkeiten und bevorzugte Ausführungsformen des Verfahrens bzw. bevorzugte Arten der mit dem Verfahren zu verwendenden Komponenten angegeben.

Eine Vorrichtung zur Durchführung des erfindungsgemäßen Verfahrens umfaßt in bekannter Weise je einen Vorratsbehälter für die erste und die zweite Komponente sowie gegebenenfalls weiterer Komponenten, ein Mischorgan zur Mischung der ersten und der zweiten Komponente sowie gegebenenfalls weiterer Komponenten, Fördermittel zur Förderung der ersten und der zweiten Komponente sowie gegebenenfalls weiterer Komponenten von den jeweiligen Vorratsbehältern zum Mischorgan, Steuermittel, die an die Fördermittel angeschlossen sind, um die erste und die zweite Komponente sowie gegebenenfalls weitere Komponenten in einem frei wählbaren Verhältnis zum Mischorgan zu fördern, und ein an das Mischorgan angeschlossenes Auftragorgan. Gemäß einem weiteren Aspekt der Erfindung wird ein Verfahren zum Betrieb einer solchen Vorrichtung vorgeschlagen, das sich dadurch auszeichnet, daß zu Beginn eines Auftragvorganges eine Förderung der ersten und der zweiten Komponente sowie gegebenenfalls weiterer Komponenten durch die Fördermittel zu dem Mischorgan und dem Auftragorgan erfolgt, und daß die Förderung der zweiten Komponente sowie gegebenenfalls weiterer Komponenten vor der Beendigung des Auftragvorganges unterbrochen wird.

Dadurch ist nämlich auf einfache Weise erreicht, daß zu Beginn des Auftragvorganges, durch die Förderung aller Komponenten zum Mischorgan, die noch in Mischorgan und den daran angeschlossenen Elementen vom vorherigen Auftragvorgang verbliebene Restmengen der ersten Komponente ausgestoßen und auf den Gegenstand aufgetragen wird, bis die im Mischorgan gebildete Mischung der ersten und zweiten sowie

3

gegebenenfalls weiterer Komponenten aus dem Applizierorgan austritt. Die Unterbrechung der Zudosierung der zweiten Komponente sowie gegebenenfalls weiterer Komponenten vor der Beendigung des Auftragvorganges bewirkt, daß sich das Mischorgan allmählich nur noch mit der ersten Komponente füllt und diese über das Applizierorgan in einem letzten Abschnitt auf den Gegenstand aufträgt.

Weitere, vorteilhafte Einzelheiten dieses Betriebsverfahrens gehen aus den vom Patentanspruch 22 abhängigen Ansprüchen 23 bis 26 hervor.

Im Sinne der vorstehenden Ausführungen muss im Rahmen der Erfindung der "Auftragvorgang" festgelegt werden. Dies wird sich in der Praxis nicht nur nach der Anzahl der zu bearbeitenden Gegenstände und deren zeitbezogener Bearbeitung richten; vielmehr ist auch das angestrebte Sicherheitsbedürfnis zu berücksichtigen. Zwei Extrembeispiele mögen dies verdeutlichen, wobei natürlich die gesamte Bandbreite dazwischen denkbar ist:

- Es wird damit gerechnet, daß in sehr kurzer Folge unvorhergesehene Unterbrüche im Produktionsablauf, d.h. im Auftragen der Masse auf die Gegenstände, auftreten können. Das Sicherheitsbedürfnis, d.h. die Gewährleistung, daß die Apparatur zum Auftragen der Mehrkomponentenmasse auf die Gegenstände nicht verstopft, sei sehr groß. In diesem Fall wird ein einzelner Auftragvorgang kurz bemessen, z. B. nur ein Bereich eines Gegenstandes bzw. nur ein einzelner Gegenstand wird innerhalb eines Auftragvorganges mit der Masse versehen.
- Es ist nicht damit zu rechnen, daß Unterbrüche im Produktionsablauf auftreten bzw. etwaige Unterbrüche sind rechtzeitig voraussehbar. In diesem Fall ist das Sicherheitsbedürfnis geringer und es können mehrere, ja gegebenenfalls sogar hunderte von Gegenständen innerhalb eines Auftragvorganges mit der Masse versehen werden; mit anderen Worten, der Auftragvorgang erstreckt sich über einen längeren Zeitraum.

Wesentlich ist im Rahmen der vorliegenden Erfindung, ein Verfahren zu offenbaren, das innerhalb einer grossen Bandbreite gestattet, den Auftragvorgang je nach Sicherheitsbedürfnis und je nach individuellen Produktionsgegebenheiten so zu gestalten, daß bei größtmöglicher Effizienz mit größter Wahrscheinlichkeit ausgeschlossen ist, daß die Apparatur zum Auftragen der Masse unbeabsichtigt verstopft und somit unbeabsichtigt außer Betrieb gesetzt wird.

Im folgenden wird die Erfindung anhand von einigen Beispielen, die keinesfalls einschränkenden Charakter besitzen, näher erläutert. Zum besseren Verständnis wird dabei auf die beiliegenden Zeichnungen Bezug genommen. In diesen zeigt:

Fig. 1     eine schematische, beispielshafte Ansicht einer Vorrichtung zum Auftragen einer aus zwei Komponenten bestehenden Klebemasse auf Gegenstände,

Fig. 2     ein erstes Beispiel in Gestalt eines verhältnismäßig kleinen, flächigen Gegenstandes, z. B. einer Scheibe, die entlang ihres Randes in einen Rahmen eingeklebt werden soll,

Fig. 3     ein zweites Beispiel in Gestalt eines verhältnismässig großen, flächigen Gegenstandes, z. B. einer Scheibe, die entlang ihres Randes in einen Rahmen eingeklebt werden soll,

Fig. 4     ein drittes Beispiel, ähnlich wie in Fig. 3.

Fig. 5     ein viertes Beispiel, bei dem mehrere, kleinere Gegenstände, z. B. kleine Scheiben, die in einen Rahmen eingeklebt werden sollen, entlang ihres Randes unmittelbar nacheinander mit der Masse versehen werden, und

Fig. 6     ein fünftes Beispiel, bei dem mehrere größere Gegenstände, z. B. Scheiben, die in einen Rahmen eingeklebt werden sollen, entlang ihres Randes unmittelbar aufeinanderfolgend mit der Masse versehen werden.

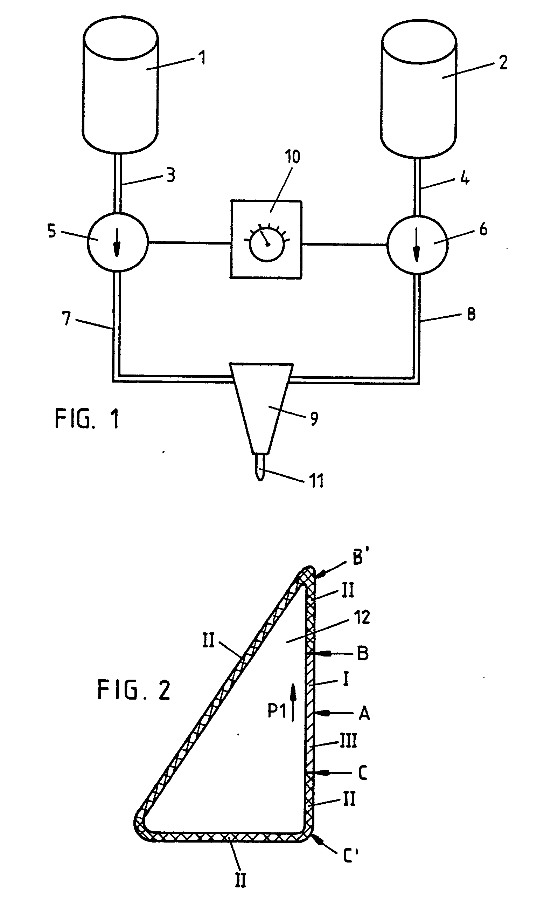

In der Fig. 1 ist als Beispiel rein schematisch die Anordnung einer Vorrichtung zum Auftragen einer Klebemasse auf einen Gegenstand dargestellt. Im Beispiel beschränkt man sich bewußt auf eine Masse, die nur aus zwei Komponenten besteht; es versteht sich, daß sinngemäß auch drei oder mehr Komponenten verwendet werden können, wobei dann für jede Komponente ein separater Vorratsbehälter, hingegen nur ein einziges, gemeinsames Misch- und Auftragorgan vorgesehen ist.

Die in der Fig. 1 schematisch gezeigte Anordnung umfaßt einen ersten Vorratsbehälter 1, der eine erste Komponente aufnimmt, und einen zweiten Vorratsbehälter 2, der eine zweite Komponente aufnimmt. Je nach Art der zur Verwendung gelangenden Komponenten sind die Behälter 1 und 2 luftdicht und/oder lichtdicht verschlossen. Damit wird verhindert, daß die eine oder andere Komponente im Vorratsbehälter bereits reagiert.

Von den Behältern 1 bzw. 2 führt eine Auslassleitung 3 bzw. 4 zu je einer zugeordneten Dosierpumpe 5 bzw. 6. Diese beiden Dosierpumpen entnehmen die jeweilige Komponente aus den Vorratsbehältern 1 und 2 und fördern diese über je eine Förderleitung 7 bzw. 8 zu einem Mischorgan 9. An das Mischorgan ist ein Auslasselement in der Gestalt eines Auftragorgans 11 angeschlossen, durch welches die Mischung der beiden Komponenten austritt und mittels welchem die Masse auf den zu beaufschlagenden Gegenstand austritt.

Die beiden Dosierpumpen 5 und 6 sind an ein gemeinsames Steuerorgan 10 angeschlossen, welches die Fördermenge der Dosierpumpen 5 und 6 in zeitlicher Abhängigkeit steuert. Das Steuerorgan ist dabei so beschaffen, daß sowohl die Gesamtfördermenge der beiden Komponenten pro Zeiteinheit wie auch der jeweilige Anteil der beiden Komponenten an der Gesamtfördermenge beeinflußt bzw. eingestellt werden kann.

Im allgemeinen wird die Einstellung und die Funktion des Steuerorganes so gewählt sein, daß die Summe der Fördermengen der beiden Dosierpumpen 5 und 6 pro Zeiteinheit konstant ist, unabhängig vom jeweils gerade herrschenden Fördermengenverhältnis zwischen der ersten und der zweiten Komponente.

Die vorstehend beschriebene Anordnung ist an sich bekannt und bedarf deshalb keiner weiteren Erläuterung; insbesondere liegt es im Rahmen der Kenntnisse des mit der Materie vertrauten Fachmannes, die Vorratsbehälter 1 und 2, die Dosierpumpen 5 und 6, das Mischorgan 9 und das Steuerorgan 10 zweckmäßig auszuwählen und zu dimensionieren. Weiter ist klar, daß im Rahmen der erfindungsgemäßen Aufgabe entweder das Mischorgan 9 mit Auftragorgan 11 oder der Gegenstand, auf den die Masse aufzutragen ist, relativ zueinander bewegt werden müssen; auch in dieser Beziehung bedarf es keiner weiteren Erläuterung. Schließlich sei der Vollständigkeit halber noch darauf hingewiesen, daß das Steuerorgan nicht unbedingt ein mechanisch oder elektronisch gesteuertes Gerät sein muss; genau so gut ist es denkbar, ein manuell zu bedienendes Steuergerät einzusetzen, bzw. die Bedienung der Vorrichtung überhaupt manuell gesteuert durchzuführen.

In der Fig. 2 ist als erstes Beispiel eine verhältnismäßig kleine Scheibe 12 dargestellt, z. B. eine Seitenscheibe eines Automobils, die in einen nicht dargestellten Rahmen einzukleben ist. Zu diesem Zweck wird die Scheibe entlang ihres Randes, über eine gewisse Breite, mit einer Klebstoffmasse beschichtet und dann in den Rahmen eingelegt. Gemäß dem Verfahren, das die vorliegende Erfindung vorschlägt, erfolgt das Auftragen der Klebemasse bei diesem Beispiel in der folgenden Weise:

Es ist ein einziger Randbereich entlang der gesamten Peripherie der Scheibe 12 mit der Klebemasse zu versehen. Dieser Bereich gliedert sich in einen Abschnitt I, einen Abschnitt II und einen Abschnitt III. Ausgehend vom Punkt A, in welchem das Mischorgan 9 bzw. sein Auslaß 11 in Position gebracht wird, wird im Abschnitt I nur die (selbsthärtende) erste Komponente der Klebemasse aufgetragen, indem das Mischorgan 9 bzw. sein Auftragorgan 11 in Richtung des Pfeiles $P_1$ verschoben wird. Danach, währenddem das Mischorgan bzw. sein Auftragorgan 11 den Bereichsabschnitt II überstreicht, tritt das Gemisch aus erster und zweiter Komponente aus den Auslaß 11 aus. Während des Durchlaufens des Bereichsabschnittes III schließlich wird der Rand der Scheibe 12 wiederum lediglich mit der ersten (selbsthärtenden, Komponente beschichtet, bis das Mischorgan 9 bzw. dessen Auftragorgan 11 den Punkt A wieder erreicht hat.

Damit ist zweierlei erreicht:

Zum einen ist der gesamte Rand der Scheibe 12, umfassend die Abschnitte I, II und III, mit der Klebemasse versehen. Der längenmäßig (und damit flächenmäßig) überwiegende Abschnitt II ist mit der rasch ausreagierenden Mischung aus erster und zweiter Komponente versehen. Es ist also gewährleistet, daß die Scheibe 12 nach dem Einsetzen in den (nicht gezeigten) Rahmen innerhalb kurzer Zeit an diesem haftet. Die vergleichswise kurzen Bereichsabschnitte I und III sind hingegen lediglich mit der ersten Komponente der Klebemasse versehen; nach der Erfindungsdefinition reagiert diese ebenfalls aus, allerdings erst nach einer längeren Zeitdauer, z. B. unter Einfluß von Luftfeuchtigkeit oder Luftsauerstoff, von UV-Strahlung, von Wärme oder dgl. Da aber der Bereichsabschnitt 11, verglichen mit der Summe der Bereichsabschnitte I und III einen Anteil von 50 - 90 % besitzt, ist sichergestellt, daß die gesamte Scheibe innert kürzester Zeit mechanisch dauerhaft mit dem Rahmen verbunden ist. Die schlussendlich angestrebte Klebeverbindung ist dann erreicht, wenn auch die erste Komponente der Klebemasse in den Abschnitten I und III ausreagiert hat.

Zum anderen ist gewährleistet, daß das Mischorgan 9 und damit auch das Auftragorgan 11 beim Erreichen des Punktes A, d.h. nach vollendetem Auftrag-Zyklus, nunmehr mit der ersten Komponente gefüllt ist, die, wie erinnerlich, nur vergleichsweise langsam bzw. unter Luft- und/oder Lichtabschluß nahezu überhaupt nicht ausreagiert. Dies bedeutet, daß nach einem vollendeten Auftragvorgang ohne nachteilige Folgen, ohne Spülen des Mischorgans, die Auftragvorrichtung außer Betrieb gesetzt werden kann, z. B. infolge Essenspausen, Schichtwechsel, ja sogar über Nacht.

Im praktischen Betrieb der Vorrichtung wird beim nachfolgenden Auftragvorgang, ausgehend vom Punkt A, sofort oder unmittelbar nach Beginn des Auftragens der Masse, die zweite Komponente zudosiert, indem die zugehörige Dosierpumpe 6 (Fig. 1) in Betrieb gesetzt wird. Dies bedeutet aber, daß während des Durchlaufens des Abschnittes I die Restmenge an erster Komponente aus dem Mischorgan 9 ausgestossen und aufgetragen wird, und daß sich, nach erfolgter Bildung der Mischung, selbsttätig ein Übergang bei einem Punkt zwischen B und B' in den Anschnitt II einstellt, wo die Mischung aus erster und zweiter Komponente aus dem Mischorgan 9 austritt. Nach dem Durchlaufen des Abschnittes II wird bei einem Punkt C' die Zudosierung der zweiten Komponente unterbrochen; das restliche, noch im Mischorgan 9 vorhandene Gemisch wird noch ausgestossen und aufgetragen, in der Weise, daß bei Erreichen des Punktes C nur noch die erste Komponente auf die Scheibe 12 aufgetragen wird.

Es versteht sich, daß die vorgenannten Punkte B, B', C und C' nicht ganz exakt definiert sind; je nach Produkte- und Verfahrensparametern wird sich eine kleine Verschiebung in der einen oder anderen Richtung ergeben. Auch dürfte der Übergang z. B. vom Abschnitt I zum Abschnitt II (Punkt B) sowie vom Abschnitt II zum Abschnitt III (Punkt C) nicht schlagartig, sondern eher mehr oder weniger kontinuierlich sein, da immer gewisse Restmengen der zweiten Komponente in abnehmendem Masse in die Mischung gelangen Andererseits ist in gewissen Anwendungsfällen auch denkbar, diesen Übergang bewußt kontinuierlich zu gestalten, indem die Zudosierung der zweiten Komponente nicht plötzlich unterbrochen wird, sondern stetig abnehmend erfolgt.

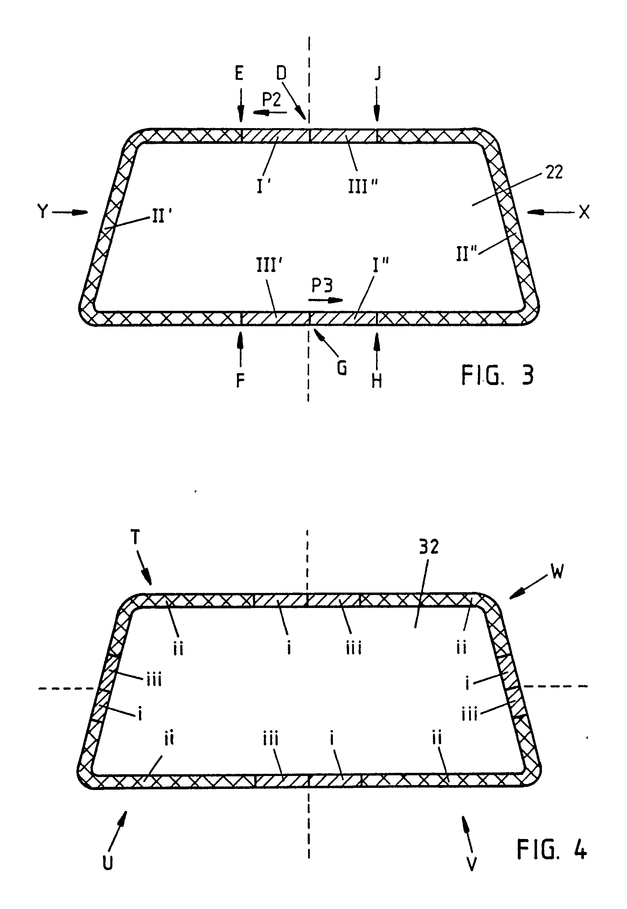

Beim Beispiel gemäß Fig. 3 ist eine große Scheibe 22 mit einem (nicht dargestellten) Rahmen zu verkleben. An sich kann ohne weiteres genau gemäß dem Verfahren vorgegangen werden, wie es im Zusammenhang mit Fig. 2 beschrieben worden ist. Unter Umständen kann es aber wünschenswert sein, zwei Bereiche X und Y umabhängig voneinander mit der aus zwei oder mehr Komponenten bestehenden Klebemasse zu versehen, um symmetrische Verhältnisse zu schaffen, die insbesondere bei einem grossen und damit schweren Gegenstand als wünschenswert erscheinen. Dabei sind zwei verschiedene Vorgehensweisen möglich

Mit einem einzelnen Mischorgan 9 wird, ausgehend von einem Punkt D, zunächst die erste Komponente allein in einem Abschnitt I' bis zum Punkt E, dann in einem Abschnitt II' eine Mischung aus der ersten und der zweiten Komponente bis zum Punkt F und dann wiederum die erste Komponente allein in einem Abschnitt III' bis zum Punkt G aufgetragen. Danach wird der anschließende Abschnitt I'' bis zum Punkt H mit der ersten Komponente, der weitere Abschnitt II' bis zum Punkt J mit der Mischung aus der ersten und der zweiten Komponente und schließlich der letzte Abschnitt III'' wiederum mit der ersten Komponente allein beschichtet, bis der Ausgangspunkt D wieder erreicht ist.

Für eine wirtschaftlichere, insbesondere zeitsparendere Vorgehensweise sorgt die zweite Möglichkeit: Man sieht zwei Mischorgane 9 vor, von denen das eine am Punkt D in Richtung des Pfeiles $P_2$ und das andere am Punkt G in Richtung des Pfeiles $P_3$ startet. Das Auftragen der Klebemasse erfolgt dabei wie vorher beschrieben, wobei jedoch die Abschnitte I' und I'', die Abschnitte II', und II'' sowie die Abschnitte III' und III'' gleichzeitig beschichtet werden.

Entsprechendes gilt für das Beispiel gemäß Fig. 4: Der gesamte Randbereich der Scheibe 32 ist in Bereiche T, U, V und W gegliedert. Diese unterteilen sich jeweils in einen Anfangsabschnitt i, einen Mittelabschnitt ii und einen Endabschnitt iii. Auch hier können die Bereiche T, U, V und W entweder nacheinander, mittels eines einzigen Mischorgans und eines einzigen Auftragorgans, oder aber simultan mit vier Mischorganen und vier zugeordneten Auftragorganen mit der Klebemasse beschichtet werden. Dieses Konzept bietet sich insbesondere bei sehr großen und damit sehr schweren und/oder bei dreidimensional kompliziert geformten Gegenständen an.

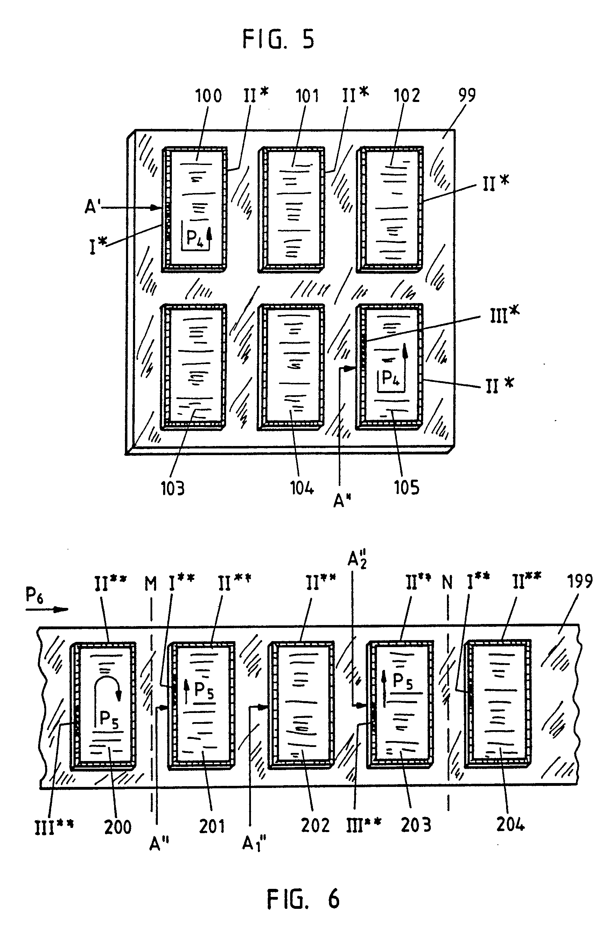

Anhand der Darstellung in Fig. 5 wird ein weiterer Anwendungsfall erläutert:

Auf einem Träger 99 sind mehrere Gegenstände 100 bis 105 angeordnet, die entlang eines Randbereiches mit der Masse zu versehen sind. Der Träger 99 mit diesen Gegenständen wird dabei in den Bereich des (nicht dargestellten) Auftragorganes gebracht. Der Verfahrensablauf ist wie folgt: Auf den ersten Gegenstand 100 auf dem Träger 99 wird in einem Abschnitt I*, ausgehend vom Punkt A' , in Richtung des Pfeiles $P_4$, nur die erste Komponente aufgetragen. Auf den verbleibenden Randbereich II* wird hingegen eine Mischung aus der ersten und der zweiten Komponente aufgebracht, bis der Punkt A' wieder erreicht ist. Danach verschiebt sich das Auftragorgan 11 zum zweiten Gegenstand 101, auf dessen Randbereich II*, der sich über den gesamten Umfang des Gegenstandes erstreckt, unmittelbar danach ebenfalls die Mischung aus der ersten und der zweiten Komponente aufgebracht wird. Das gleiche gilt für die ebenfalls auf dem Träger 99 angeordneten Gegenstände 102, 103 und 104. Beim Gegenstand 105 auf dem Träger 99 wird, ausgehend vom Punkt A'' in Richtung des Pfeiles $P_4$, noch die Mischung aus der ersten und der zweiten Komponente im Bereich II* aufgetragen; im Bereich III* jedoch, eventuell kontinuierlich übergehend, nur noch die erste Komponente allein.

In diesem Fall umfaßt also ein einzelner Auftragvorgang sechs Gegenstände. Natürlich können es auch mehr oder weniger sein. Insbesondere, wenn es sich um sehr kleine Gegenstände handelt und wenn keine Störungen zu erwarten sind, können in dieser Weise 10 oder 50 oder hunderte von Gegenständen nacheinander mit der Masse versehen werden. Gerade in diesem Fall und bei kleinen Gegenständen ist es auch denkbar, daß sich der Bereich I* über den gesamten ersten, eventuell auch über den zweiten und dritten Gegenstand, sowie sinngemäß der Bereich III* nicht nur über einen Teil des letzten Gegenstandes, sondern über den gesamten letzten Gegenstand, eventuell sogar über den zweit- oder drittletzten Gegenstand erstreckt.

In der Fig. 6 ist schematisch ein in Richtung des Pfeiles $P_6$ bewegtes Fließband 199 dargestellt, auf dem einzelne Gegenstände, ausschnittweise mit 201 bis 204 bezeichnet, angeordnet sind, welche alle entlang eines Randbereiches mit der Masse zu beschichten sind. Aus Überlegungen, die dem gewählten Sicherheitsbedürfnis und auch ökonomischen Gedankengängen entspringen, ist das Fließband 199 in virtuelle Abschnitte, z. B. von M bis N, unterteilt. Innerhalb eines jeden dieser virtuellen Abschnitte, die im Beispielsfall drei Gegenstände 201, 202 und 203 umfassen, findet ein einzelner Auftragsvorgang statt. Selbstverständlich können innerhalb eines solchen virtuellen Abschnittes auch mehr oder weniger Gegenstände sein.

Jedenfalls wird im Sinne der Erfindung der erste Gegenstand 201 innerhalb des virtuellen Abschnittes zwischen M und N, ausgehend von einem Punkt A'', in einem Bereich 1** nur mit der ersten Komponente allein beschichtet; das Auftragorgan bewegt sich dabei in Richtung des Pfeiles $P_5$ und beschichtet anschließend den Bereich II** mit der Mischung aus der ersten und der zweiten Komponente, bis wiederum der Punkt A'' erreicht ist. Nun bewegt sich das Auftragorgan zum Punkt $A_1$'' des Gegenstandes 202, dessen gesamter Randbereich II** mit der Mischung aus der ersten und der zweiten Komponente versehen wird, indem das Auftragorgan in Richtung des Pfeiles $P_5$ dem Rand des Gegenstandes 202 entlang bewegt wird. Schließlich wird das Auftragorgan zum Punkt $A_2$'' des dritten Gegenstandes 203 bewegt, auf den, durch Bewegung des Auftragorganes in Richtung des Pfeiles $P_5$, der Bereich II** mit der Mischung aus der ersten und der zweiten Komponente versehen wird. Vor Erreichen des Punktes $A_2$'' wird die Zudosierung der zweiten Komponente unterbunden, so daß in einem Bereich III** nunmehr die erste Komponente allein aufgetragen wird.

Dieses Vorgehen wiederholt sich sinngemäß in den anschließenden, virtuellen Abschnitten, beginnend mit dem Gegenstand 204. Im beispielhaft geschilderten Fall umfaßt ein einzelner Auftragvorgang drei Gegenstände; es versteht sich, daß es auch mehr oder weniger sein können. Der zwangsläufig notwendige

6

Unterbruch im Auftragvorgang der Mischung, wenn sich das Auftragorgan vom einen Gegenstand zum anderen bewegt, wird dabei ausdrücklich <u>nicht</u> als Beendigung eines Auftragvorganges verstanden, da es sich nur um einen sehr kurz bemessenen Unterbruch handelt, der keinen Einfluß auf das chemische oder physikalische Verhalten der Mischung im Auftragorgan, insbesondere auf ein unerwünschtes Ausreagieren der Mischung, hat.

Als Klebe-, Dichtungs-, Versiegelungs- oder Beschichtungsmasse kann ein weites Spektrum von Zwei- oder Mehr-Komponenten-Systemen verwendet werden. Wesentlich dabei ist, daß die erste Komponente (Komponente A) fähig ist, "selbst" auszureagieren, d.h. ohne Zusatz einer zweiten Komponente (Komponente B). Damit ist gemeint, daß die Komponente A unter dem Einfluß von Luftfeuchtigkeit oder Luftsauerstoff, von UV-Strahlung, von Wärme und dgl. in einen stabilen Endzustand ausreagieren wird, unter Bedingungen also, die eine normale Umgebung bietet. Weiter ist wesentlich, daß sich diese Reaktion der Komponente A durch Zusatz, insbesondere durch Beimischen einer zweiten Komponente B oder gegebenenfalls dritten, usw. Komponenten beschleunigen läßt.

In der beiliegenden Tabelle 1 werden, ohne Anspruch auf Vollständigkeit, einige mögliche Zwei-Komponenten-Systeme angegeben, die sich besonders für die Anwendung mit dem erfindungsgemäßen Verfahren eignen.

Obzwar die vorliegende Erfindung vorstehend am Beispiel des Auftragens einer Klebemasse erläutert worden ist, versteht es sich, daß sinngemäß die gleichen Überlegungen für eine Dichtungsmasse, eine Versiegelungsmasse, eine Beschichtungsmasse oder ähnliche Massen gelten. Weiter liegt es im Rahmen der Erfindung, daß Mehrkomponenten-Systeme verwendet werden können, sei es, daß als erste Komponente eine im Sinn der Erfindung selbstreagierende Substanz und als "zweite" Komponente zwei oder mehr die Reaktion der ersten Komponente beschleunigende Substanzen zugemischt werden, sei es, daß sowohl die "erste" als auch die "zweite" Komponente vor dem Auftragen aus mehreren Teilkomponenten zusammengesetzt werden, sei es schließlich, daß während des Auftragsvorganges noch eine oder mehrere zusätzliche Komponenten zugemischt werden.

**Tabelle 1**

| Beispiel Nr. | Komponente A | Komponente B | Gelierzeit bei RT | |
|---|---|---|---|---|
| | | | A allein | A + B |
| 1 | Polymerkapto-Verbindung + Erdal-kaliperoxyd wasserfreien Zustand, feuchtigkeitshärtend, z. B. gemäß US-PS-3 912 696 od. US-PS-3 225 017. | Wasser enthaltende Polymerkaptoverbindung | 1 Tag | 30-60 min |
| 2 | Polyurethan-Präpolymer mit end-ständigen Silangruppen, feuch-tigkeitshärtend, z. B. gem. US-PS-3 632 557 oder US-PS-4 222 925 | Gemisch von Wasser oder Polyamin mit Weichmacher | 1 Tag | 3-10 min |
| 3 | Polyurethan-Präpolymer mit end-ständigen Isocyanat-Gruppen, feuchtigkeitshärtend z. B. US-PS-3 779 794 oder EP-OS-0 040 469 | Wasser, Polyol oder Polyamin in Weichmacher | 1 Tag | 1/2-5 min |
| 4 | wie in Beispiel 3 | Polturethan-Präpolymer mit end-endständigen Mercapto-, Hyd-roxy-, Amino- oder Carboxy-Endgruppen, z. B. gem. EP-OS-0 153 456 | 1 Tag | 2-40 min |
| 5 | Feuchtigkeishärtende Silikon-masse, z. B. gem. DE-PS-1 255 924 oder GB-PS-992 366 | Dihydroxypolysiloxan-Paste, gegebenenfalls mit Wasser als Beschleuniger | 1 Tag | 2-20 min |
| 6 | Gemisch aus einem Epoxydharz und einem polyfunktionellen Ketimin, feuchtigkeitshärtend | Diamin- oder Wasserpaste | 1 Tag | 1/2 - 2 h |
| 7 | Gemisch aus einem Epoxydharz und einem mit polyfunktionellem | Diamin- oder Wasserpaste | 1 Tag | 1/2 - 2 h |

Amin beladenen Molekularsieb, feuchtigkeitshärtend

| | | | | |
|---|---|---|---|---|
| 8 | Ungesättigtes Polyesterharz mit Erdalkaliperoxyd in wasserfreiem Zustand, feuchtigkeitshärtend, gem. US-PS-3 652 521 | Peroxydpaste und (getrennt) Kobaltnaphthenat | 1 Tag | 10-30 min |
| 9 | Gemisch aus Polyurethan-Präpolymer mit endständigen Mercaptan-Gruppen und einem Oxydationsbeschleuniger, Luftsauerstoffhärtend, z. B. gemäß EP-PS-0 066 167 | Peroxydpaste | 1 Tag | 15-45 min |
| 10 | Gemisch aus einem Epoxydharz mit einem $BF_3$-Amin-Komplex, wärmehärtend | $BF_3$-Ätherat | 1 Tag (bei 100° ca. 10 min) | 1-5 min |
| 11 | Gemisch aus einem ungesättigten Polyesterharz und organischen Peroxyden, wärmehärtend | Co-Naphthenat oder Sulfinsäuren oder Amine | 1 Tag (bei 100° ca. 10 min) | 5-30 min |

## Patentansprüche

1. Verfahren zum Auftragen einer mindestens zwei Komponenten umfassenden Klebe-, Dichtungs-, Versiegelungs- oder Beschichtungsmasse auf Gegenstände, welche Masse als erste Komponente eine in Abwesenheit der anderen Komponente härtbare Klebe-, Dichtungs-, Versiegelungs- oder Beschichtungssubstanz und als zweite Komponente einen mit der ersten Komponente reagierenden Härter oder einen Härtungsbeschleuniger umfaßt, wobei zumindest auf einzelne Gegenstände, zu Anfang und/oder zu Ende des Auftragvorganges, die erste Komponente allein, während des verbleibenden Auftragvorganges hingegen eine Mischung aus der ersten und zumindest der zweiten Komponente aufgetragen wird, wobei die Herstellung der Mischung aus der ersten und der zweiten sowie gegebenenfalls weiteren Komponenten unmittelbar vor dem Auftragen dieser Mischung kontinuierlich im Durchlauf in einem für alle Komponenten gemeinsamen Mischorgan erfolgt, wobei das Auftragen der Masse durch ein für alle Komponenten gemeinsames Auftragsorgan erfolgt, und wobei schließlich zu Anfang und/oder zu Ende des Auftragsvorganges die erste Komponente allein durch das Misch- und Auftragsorgan geleitet wird.

2. Verfahren nach Anspruch 1, dadurch gekennzeichnet, daß auf einzelne Bereiche von Gegenständen, innerhalb eines jeden Bereichs, nacheinander zunächst die erste Komponente allein, dann eine Mischung aus der ersten und zumindest der zweiten Komponente und schließlich wieder die erste Komponente allein aufgetragen wird.

3. Verfahren nach Ansprüchen 1 oder 2, dadurch gekennzeichnet, daß auf die Gegenstände zunächst in einem ersten Abschnitt die erste Komponente allein, dann daran anschließend und kontinuierlich übergehend, in einem zweiten Abschnitt, eine Mischung aus der ersten und zumindest der zweiten Komponente und schließlich daran anschließend und kontinuierlich übergehend, in einem dritten Abschnitt, wieder die erste Komponente allein aufgetragen wird.

4. Verfahren nach Anspruch 3, dadurch gekennzeichnet, daß während des Auftragens der Masse, zu Beginn oder während eines anfänglichen Teilabschnittes des genannten ersten Abschnittes, eine Zudosierung zumindest der zweiten Komponente zur ersten Komponente und dabei die Herstellung der Mischung erfolgt, und daß zu Ende des genannten zweiten Abschnittes die Zudosierung der zweiten Komponente und gegebenenfalls weiterer Komponenten zur Mischung unterbrochen wird.

5. Verfahren nach einem der vorhergehenden Ansprüche, bei welchem die Gegenstände eine Mehrzahl von Auftrag-Bereichen umfaßen, dadurch gekennzeichnet, daß nacheinander in jedem Bereich zunächst die erste Komponente allein, dann eine Mischung aus der ersten und zumindest der zweiten Komponente und schließlich wieder die erste Komponente allein aufgetragen wird.

6. Verfahren nach einem der Ansprüche 1 bis 4, bei welchem der Gegenstand eine Mehrzahl von Auftrag-Bereichen umfaßt, dadurch gekennzeichnet, daß in jedem Bereich gleichzeitig zunächst die erste Komponente allein, dann eine Mischung aus der ersten und zumindest der zweiten Komponente und schließlich wieder die erste Komponente allein aufgetragen wird.

7. Verfahren nach einem der Ansprüche 3 - 6, dadurch gekennzeichnet, daß der genannte erste Abschnitt flächenmäßig bis zu 25 %, der genannte zweite Abschnitt mindestens 50 % und der genannte dritte Abschnitt bis zu 25 %, der Summe der ersten bis dritten Abschnitte beträgt.

8. Verfahren nach Anspruch 1, bei welchem die Masse innerhalb eines Auftragvorganges auf eine Mehrzahl n von Gegenständen nacheinander aufgetragen wird, dadurch gekennzeichnet, daß auf den ersten und gegebenenfalls auf den zweiten oder einige der nachfolgenden Gegenstände und/oder auf den letzten (n-ten) und gegebenenfalls auf den (n-1)-ten oder einige der vorhergehenden Gegenstande nur die erste Komponente allein aufgetragen wird, während auf die verbleibenden Gegenstände eine Mischung aus der ersten und zumindest der zweiten Komponente aufgetragen wird.

9. Verfahren nach einem der vorhergehenden Ansprüche, dadurch gekennzeichnet, daß die erste und/oder die zweite Komponente ihrerseits aus mehreren zunächst getrennten Teil-Komponenten besteht bzw. bestehen, die während des Mischvorganges zusammengemischt werden, oder daß noch weitere Komponenten zugemischt werden.

10. Verfahren nach einem der vorhergehenden Patentansprüche, dadurch gekennzeichnet, daß die erste Komponente durch eine in atmosphärischer Luft härtende Substanz gebildet ist.

11. Verfahren nach einem der vorhergehenden Ansprüche, dadurch gekennzeichnet, daß die erste Komponente aus einer oxydativ härtenden Substanz besteht.

12. Verfahren nach Anspruch 11, dadurch gekennzeichnet, daß die zweite Komponente ein Oxydationsmittel enthält.

13. Verfahren nach Anspruch 12, dadurch gekennzeichnet, daß die zweite Komponente zusätzlich einen Oxydationskatalysator enthält.

14. Verfahren nach Anspruch 11, dadurch gekennzeichnet, daß die erste Komponente aus einer Polymercapto-Verbindung besteht.

15. Verfahren nach Patentanspruch 10, dadurch gekennzeichnet, daß die erste Komponente aus einer unter dem Einfluß von Luftfeuchtigkeit härtenden Substanz besteht.

16. Verfahren nach Anspruch 15, dadurch gekennzeichnet, daß die erste Komponente aus einem Präpolymer mit Isocyanat-, Alkoxysilan-, Aminosilan- oder Acetoxysilan-Endgruppen besteht.

17. Verfahren nach Anspruch 15 oder 16, dadurch gekennzeichnet, daß die zweite Komponente Wasser, ein Polyol, ein Dihydroxypolysiloxan oder ein Polyamin enthält.

18. Verfahren nach Anspruch 15 oder 16, dadurch gekennzeichnet, daß die zweite Komponente ein Polyurethan-Präpolymer mit endständigen Mercapto- , Hydroxy- , Amino- oder Carboxy-Endgruppen enthält.

19. Verfahren zum Betrieb einer Vorrichtung zur Durchführung des Verfahrens nach einem oder mehreren der Ansprüche 1 bis 18, mit je einem Vorratsbehälter (1, 2) für die erste und die zweite sowie gegebenenfalls weitere Komponenten, mit einem Mischorgan (9) zur Mischung der ersten und der zweiten Komponente sowie gegebenenfalls weiterer Komponenten, mit Fördermitteln (5, 6) zur Förderung der ersten und der zweiten Komponente sowie gegebenenfalls weiterer Komponenten von den jeweiligen Vorratsbehältern zum Mischorgan, mit Steuermitteln (10), die an die Fördermittel angeschlossen sind, um die erste und die zweite sowie gegebenenfalls weitere Komponenten in einem frei wählbaren Verhältnis zum Mischorgan zu fördern, und mit einem an das Mischorgan angeschlossenen Auftragorgan (11), wobei zu Beginn eines Auftragvorganges eine Förderung der ersten und der zweiten Komponente sowie gegebenenfalls weiterer Komponenten durch die Fördermittel (5, 6) zu dem Mischorgan (9) und dem Auftragorgan (11) erfolgt, und die Förderung der zweiten Komponente sowie gegebenenfalls weiterer Komponenten vor der Beendigung des Auftragvorganges unterbrochen wird.

20. Verfahren nach Anspruch 19, dadurch gekennzeichnet, daß das Steuerorgan (10) am Ende des Mischvorganges die erste Komponente dem Mischorgan (9) und dem Auftragorgan (11) so lange allein zuführt, bis das Mischorgan (9) und das Auftragorgan (11) zumindest annähernd kein die zweite Komponente sowie eventuelle weitere Komponenten enthaltendes Gemisch mehr enthält, so daß zu Beginn eines nachfolgenden Auftragvorgangs nur die erste Komponente allein aus dem Auftragorgan austritt.

21. Verfahren nach Anspruch 20, dadurch gekennzeichnet, daß am Ende des Mischvorganges die erste Komponente dem Mischorgan in einer solchen Menge allein zugeführt wird, die größer ist als der Inhalt des Mischorganes (9) und des Auftragorganes (11) zusammen.

22. Verfahren nach einem der Ansprüche 19 - 21, dadurch gekennzeichnet, daß die Summe der Dosiermengen der einzelnen Komponenton in das Mischorgan (9) so gesteuert wird, daß der Gesamtausstoß aus dem Auftragorgan (11) konstant bleibt.

23. Verfahren nach einem der Ansprüche 19 - 22, dadurch gekennzeichnet, daß die erste und die zweite sowie gegebenenfalls weitere Komponenten in einem kontinuierlichen Durchlaufmischprozeß miteinander vermischt werden.

## Claims

1. Process for applying an adhesive, packing, sealing or coating compound, containing at least two components, to objects, which compound comprises, as first component, an adhesive, packing, sealing or coating substance which can be cured in the absence of the other component and, as second component, a curing agent or a curing accelerator which reacts with the first component, whereby the first component alone is applied at least to single objects at the beginning and/or end of the application operation and whereby, on the other hand, a mixture of the first and at least the second components is applied during the remaining application operation, whereby the mixture of the first and the second, and, if appropriate, further components is prepared immediately before the application of said mixture continuously in a flow process in a mixing device common to all the components, whereby the compound is applied by an application device common to all the components, and whereby finally the first component alone is passed through the mixing and application devices at the beginning and/or at the end of the application operation.

2. Process according to Claim 1, characterized in that first the first component alone, then a mixture of the first and at least the second component and finally again the first component alone are applied successively within each area to separate areas of the objects.

3. Process according to Claims 1 or 2, characterized in that first the first component alone is applied to the objects in a first section, then subsequent thereto and with a continuous transition, a mixture of the first and at least the second component is applied in a second section and finally, subsequent thereto and with a continuous transition, the first component alone is applied again in a third section.

4. Process according to Claim 3, characterized in that, while the compound is being applied, a metred addition at least of the second component to the first component and, in this operation, the preparation of the mixture takes place at the beginning or during an initial subsection of the said first section, and in that, at the end of the said second section, the metred addition of the second component, and optionally of further components, to the mixture is interrupted.

5. Process according to one of the preceding claims in which the objects comprise a multiplicity of application areas, characterized in that first the first component alone, then a mixture of the first and at least the second component and finally again the first component alone are applied consecutively in each area.

6. Process according to one of the Claims 1 to 4, in which the object comprises a multiplicity of application areas, characterized in that first the first component alone, then a mixture of the first and at least of the second component and finally again the first component alone are applied simultaneously in each area.

7. Process according to one of the Claims 3 - 6, characterized in that the said first section amounts to up to 25 % in area, the said second section to at least 50 % and the said third section to up to 25 % of the sum of the first to the third sections.

8. Process according to Claim 1, in which, in the course of an application operation, the compound is applied consecutively to a multiplicity n of objects, characterized in that only the first component alone is applied to the first and optionally to the second or a few of the subsequent objects and/or to the last (nth) (sic) and optionally to the (n-1)th or a few of the preceding objects, while a mixture of the first and at least of the second component is applied to the remaining objects.

9. Process according to one of the preceding claims, characterized in that the first and/or the second component in its/their turn is/are composed of several initially separated subcomponents which are mixed together during the mixing operation, or in that yet other components are added.

10. Process according to one of the preceding patent claims, characterized in that the first component is formed by a substance which cures in atmospheric air.

11. Process according to one of the preceding claims, characterized in that the first component is composed of an oxidatively curing substance.

12. Process according to Claim 11, characterized in that the second component contains an oxidizing agent.

13. Process according to Claim 12, characterized in that the second component additionally contains an oxidation catalyst.

14. Process according to Claim 11, characterized in that the first component is composed of a polymercapto compound.

15. Process according to patent Claim 10, characterized in that the first component is composed of a substance which cures on exposure to atmospheric humidity.

16. Process according to Claim 15, characterized in that the first component is composed of a prepolymer containing isocyanate, alkoxysilane, aminosilane or acetoxysilane end groups.

17. Process according to Claim 15 or 16, characterized in that the second component contains water, a polyol, a dihydroxypolysiloxane or a polyamine.

18. Process according to Claim 15 or 16, characterized in that the second component contains a polyurethane prepolymer with terminal mercapto, hydroxo, amino or carboxyl end groups.

19. Process for operating an apparatus for carrying out the process according to one or more of the Claims 1 to 18, comprising in each case one stock container (1, 2) for the first and the second and also optionally further components, a mixing device (9) for mixing the first and the second component and also optionally further components, means of transportation (5, 6) for transporting the first and the second component and also optionally further components from the respective stock containers to the mixing device, control means (10) which are connected to the means of transportation for transporting the first and the second and also optionally further components in a freely selectable ratio to the mixing device, and an application device (11) connected to the mixing device, the first and the second component and also optionally the further components being transported at the beginning of an application operation to the mixing device (9) and the application device (11) by the means of transportation (5, 6), and the transportation of the second component and also optionally further components being interrupted before the termination of the application operation.

20. Process according to Claim 19, characterized in that, at the end of the mixing operation, the control device (10) supplies alone the first component to the mixing device (9) and the application device (11) until the mixing device (9) and the application device (11) contain at least approximately no mixture containing the second component and also optionally further components, so that only the first component alone emerges from the application device at the beginning of a subsequent application operation.

21. Process according to Claim 20, characterized in that at the end of the mixing operation, the first component alone is fed to the mixing device in such an amount which is greater than the content of the mixing device (9) and the application device (11) taken together.

22. Process according to one of the Claims 19 - 21, characterized in that the sum of the metred amounts of the individual components in the mixing device (9) is controlled in a manner such that the total discharge from the application device (11) remains constant.

23. Process according to one of the Claims 19 - 22, characterized in that the first and the second and optionally further components are mixed with each other in a continuous flow mixing operation.

**Revendications**

1. Procédé d'application sur des objets d'une matière de collage, d'étanchéité, de scellement ou de revêtement comprenant au moins deux composants, ladite matière comprenant comme premier composant une substance de collage, d'étanchéité, de scellement ou de revêtement durcissable en l'absence de l'autre composant, et, comme deuxième composant un durcisseur ou un accélérateur de durcissement réagissant avec le premier composant, ledit procédé comportant l'application sur au moins un nombre d'objets specifique, au début et/ou à la fin de l'opération d'application, du premier composant seul et, pendant le reste de l'opération d'application, d'un mélange du premier composant et au moins du deuxième composant, la préparation du mélange du premier, du deuxième et éventuellement d'autres composants étant faite en continu immédiatement avant l'application de ce mélange dans un organe mélangeur commun à tous les composants, l'application de la matière étant faite par un organe applicateur commun à tous les composants, et enfin, au début et/ou à la fin de l'opération d'application, le premier composant seul étant envoyé dans l'organe mélangeur et l'organe applicateur.

2. Procédé selon la revendication 1, caractérisé en ce que sur différentes zones d'objets, à l'intérieur de chaque zone sont appliqués successivement, d'abord le premier composant seul, ensuite un mélange du premier composant et au moins du deuxième composant et enfin de nouveau le premier composant seul

3. Procédé selon l'une des revendication 1 et 2, caractérisé en ce que sur les objets sont appliqués d'abord, dans une première partie, le premier composant seul, ensuite, à la suite et avec transition continue, dans une deuxième partie, un mélange du premier composant et au moins du deuxième composant et enfin, à la suite et avec transition continue, dans une troisième partie, de nouveau le premier composant seul.

4. Procédé selon la revendication 3, caractérisé en ce que pendant l'application de ladite matière, au début ou pendant une partie initiale de ladite première partie sont faites une addition dosée au moins du deuxième composant au premier et ainsi la préparation du mélange, et en ce qu'à la fin de ladite deuxième partie, l'addition dosée du deuxième composant et éventuellement d'autres composants au mélange est interrompue.

5. Procédé selon l'une des revendications précédentes, dans lequel les objets comprennent plusieurs zone d'application, caractérisé en ce que successivement dans chaque zone sont appliqués d'abord le premier composant seul, ensuite un mélange du premier composant et au moins du deuxième composant et enfin de nouveau le premier composant seul.

6. Procédé selon l'une des revendications 1 à 4, dans lequel l'objet comprend plusieurs zones d'application, caractérisé en ce que dans chaque zone en même temps sont appliqués d'abord le premier composant seul, ensuite un mélange du premier et au moins du deuxième composant et enfin de nouveau le premier composant seul.

7. Procédé selon l'une des revendications 3 à 6, caractérisé en ce qu'en surface, la première partie va jusqu'à 25 % de la somme des première à troisième parties, la deuxième partie est d'au moins 50 % de cette somme et la troisième partie va jusqu'à 25 % de cette même somme.

8. Procédé selon l'une des revendications 1, dans lequel ladite matière est, en une opération d'application, appliqué sur n objets l'un après l'autre, caractérisé en ce que sur le premier et éventuellement sur le deuxième ou quelques-uns des objets suivants et/ou sur le dernier (nième) et éventuellement sur le (n-1)ième ou quelques-uns des objets précédents est appliqué seulement le premier composant seul, tandis que sur les objets restants est appliqué un mélange du premier composant et au moins du deuxième composant.

9. Procédé selon l'une des revendications précédentes, caractérisé en ce que le premier et/ou le deuxième composant(s) est ou sont constitué(s) de plusieurs composants partiels initialement séparés qui sont mélangés pendant l'opération de mélange, ou en ce qu'il y est mélangé des composants supplémentaires.

10. Procédé selon l'une des revendications précédentes, caractérisé en ce que le premier composant est une substance durcissant dans l'air atmosphérique.

11. Procédé selon l'une des revendications précédentes, caractérisé en ce que le premier composant est une substance durcissant par oxydation.

12. Procédé selon la revendication 11, caractérisé en ce que le deuxième composant contient un moyen oxydant.

13. Procédé selon la revendication 12, caractérisé en ce que le deuxième composant contient en plus un catalyseur d'oxydation.

14. Procédé selon la revendication 11, caractérisé en ce que le premier composant est un composé polymercapto.

15. Procédé selon la revendication 10, caractérisé en ce que le premier composant est une substance durcissant sous l'influence de l'humidité de l'air.

16. Procédé selon la revendication 15, caractérisé en ce que le premier composant est un prépolymère comprenant des groupes terminaux isocyanate, alcoxysilane, aminosilane ou acétoxysilane.

17. Procédé selon l'une des revendications 15 et 16, caractérisé en ce que le deuxième composant contient de l'eau, un polyol, un dihydroxypolysiloxane ou une polyamine.

18. Procédé selon l'une des revendications 15 et 16, caractérisé en ce que le deuxième composant est un prépolymère de polyuréthane comprenant des groupes terminaux mercapto, hydroxy, amino ou carboxy.

19. Procédé d'opération d'un dispositif pour la mise en oeuvre du procédé selon une ou plusieurs des revendications 1 à 18, comportant des réservoirs (1, 2) pour le premier, le deuxième et éventuellement d'autres composants, un organe mélangeur (9) pour le mélange du premier, du deuxième et éventuellement d'autres composants, des moyens de transport (5, 6) pour le transport du premier, du deuxième et éventuellement d'autres composants des réservoirs à l'organe mélangeur, des moyens de commande (10) reliés aux moyens de transport pour envoyer le premier, le deuxième et éventuellement d'autres composants à l'organe mélangeur dans des proportions pouvant être choisies librement, et un organe applicateur (11) raccordé à l'organe mélangeur, un envoi du premier, du deuxième et éventuellement d'autres composants étant effectué au début d'une opération d'application par les moyens de transport (5, 6) à l'organe mélangeur (9) et à l'organe applicateur (11), et le transport du deuxième composant et éventuellement d'autres composants étant interrompu avant la fin de l'opération d'application.

20. Procédé selon la revendication 19, caractérisé en ce que l'organe de commande (10), à la fin de l'opération de mélange, envoie le premier composant seul à l'organe mélangeur (9) et à l'organe applicateur (11) jusqu'à ce que ces organes ne contiennent, au moins approximativement, plus de mélange contenant le deuxième composant et les autres composants éventuels, de façon que, au début de l'opération suivante d'application, uniquement le premier composant sorte seul de l'organe applicateur.

21. Procédé selon la revendication 20, caractérisé en ce qu'à la fin de l'opération de mélange, le premier composant est envoyé seul à l'organe mélangeur en quantité supérieure au contenu cumulé de l'organe mélangeur (9) et de l'organe applicateur (11).

22. Procédé selon l'une des revendications 19 à 21, caractérisé en ce que la somme des quantités dosées des différents composants introduites dans l'organe mélangeur (9) est régulée de façon que le débit total de l'organe applicateur (11) reste constant.

23. Procédé selon l'une des revendications 19 à 22, caractérisé en ce que le premier, le deuxième et éventuellement d'autres composants sont mélangés en continu.

FIG. 1

FIG. 2

FIG. 3

FIG. 4

FIG. 5

FIG. 6